# EUROPEAN PATENT SPECIFICATION

(11) **EP 4 573 045 B1**
(45) Date of publication and mention of the grant of the patent: **30.09.2026**
(21) Application number: 23757905.7
(22) Date of filing: 17.08.2023
(51) Int. Cl.: C01B 25/45, H01M 4/58

(54) **IMPROVED CATHODE MATERIAL FOR SECONDARY LITHIUM BATTERIES**
VERBESSERTES KATHODENMATERIAL FÜR SEKUNDÄRE LITHIUMBATTERIEN
MATÉRIAU DE CATHODE AMÉLIORÉ POUR BATTERIES AU LITHIUM SECONDAIRE

(30) Priority: 18.08.2022 EP 22191105
(43) Date of publication of application: 25.06.2025
(73) Proprietor: Integrals Power, Kiln Farm, Milton Keynes MK11 3HA (GB)
(72) Inventor: GHAFARIAN ZAHMATKESH, Hossein, Milton Keynes, MK6 3AQ (GB); HORMOZI SHEIKHTABAGHI, Behnam, Milton Keynes, MK14 5PB (GB); JAN AHMADI, Vahid, Milton Keynes, MK14 5PB (GB)
(74) Representative: Calysta NV
(86) International application number: PCT/EP2023/072664
(87) International publication number: WO 2024/038136

(56) References cited:
- EP-A1- 2 285 740
- LI WENYING ET AL: "Ultrathin and uniform carbon-layer-coated hierarchically porous LiFePO4microspheres and their electrochemical performance", THE JOURNAL OF SUPERCRITICAL FLUIDS, vol. 116, 17 May 2016 (2016-05-17), pages 164 - 171, XP029630224, ISSN: 0896-8446, DOI: 10.1016/J.SUPFLU.2016.05.007

## Description

### Technical Field

The present invention relates to a cathode material for secondary (or rechargeable) alkali batteries and, in particular, lithium batteries which show a special specific capacity and, above all, an outstanding capacity retention even at higher discharge rates (for example, 30C or even above), in ambient and extreme temperatures.

### Background of the invention

Increased demand for mobile equipment has led since several years to a significantly increased demand for secondary batteries as energy sources. Among these secondary batteries, alkali secondary batteries, and in particular lithium secondary batteries, are widely used thanks to their high energy density and voltage, long life span and low self-discharge.

The lithium batteries generally use a carbon material as an anode and a lithium material as a cathode.

One of the most known cathode material for lithium secondary batteries is compound of formula LiFePO₄, which is a mineral of the olivine family. It was firstly identified in patent US5910382 filed in 1997 as a performing cathode material for lithium ion batteries. Reversible extraction of lithium from LiFePO₄ and insertion of lithium into FePO₄ was demonstrated at that time (delithium-lithium intercalation). Because of low cost, non-toxicity, natural abundance of iron, its excellent thermal stability, its safety characteristics, its electrochemical performance and its specific capacity (170 mA.h/g, or 610 C/g), it has gained considerable market interest since the beginning of the twentieth century.

Nevertheless, to seriously enter into the market, some improvements to LiFePO₄ material (also commonly called "LFP") was made to further increase performances or to reduce some of the drawbacks.

However, LiFePO4 has limited practical application due to the following disadvantages.

One of the main drawbacks of LiFePO₄ as a cathode material is its intrinsically low electrical conductivity, thus disadvantageously causing an increase in inner resistance of batteries. This increase also leads to an increase in polarization potential, when electric circuits close, and thus a decrease in battery capacity.

This issue was overcome gradually by reducing the particle size and/or by coating the LiFePO₄ particles with conductive materials such as carbon.

*In terms of reducing* the particle size, it has been disclosed that the particle size of the LFP material can be made nano-scaled. This has been proven to make it close to its theoretical capacity, but its significantly increased surface area will cause the electrochemical reaction product of the battery to increase, thereby exacerbating undesirable side reactions in batteries. At the same time, a large surface area requires also a high amount of binder which deteriorates process efficiency, causes poor electrode coating performance or affect conductive performance.

The research on lithium iron phosphate materials has also shown that the material morphology has a non-negligible influence on its electrochemical properties/performances.

For example, patent application EP2285740A1 discloses a specific process for preparing lithium iron phosphate having spherical primary particles (of about 30 µm size) made from an agglomeration of primary particles (of about 300-500 nm size), with cavities between the primary particles.

LI WENYING et al., "Ultrathin and uniform carbon layer coated hierarchically porous LiFePO4 microspheres and their electrochemical performance", The Journal of Supercritical Fluids, vol. 116, pages 164-171, 2016, discloses the synthetizing of LFP particles using a supercritical alcohol route.

CN101752564A discloses a one-dimensional nanostructured lithium iron phosphate, synthesized by a hydrothermal process by adjusting the pH of the reaction.

EP2360117A discloses, in its examples, lithium iron phosphate composed of secondary particles (or "agglomerates") having a mean particle diameter d₅₀ of 5 to 100 µm, formed by aggregation of primary particles having a mean particle diameter d₅₀ between 4.8 and 17.5 µm, wherein the secondary particles have a porosity between 22 and 28%. The secondary particles show a spherical shape while the primary particles have no specific shape or morphology.

EP2562856A discloses a lithium iron phosphate with a specific crystal structure, i.e. with the length in the direction [001] greater than the length in the direction [010] when the Li+ diffusion direction is the direction [010] in the lattice structure of the crystal, meaning that the length in the direction perpendicular to the Li+ diffusion direction is greater than the length in the Li+ diffusion direction. In particular, the macro-morphology of lithium iron phosphate primary particles in this document is a rod shape. Secondary particles show a size of ~300 microns (as illustrated in Fig.1 from EP2562856A).

Nevertheless, despite all the developments/improvements brought to LFP cathode material, due to increased demand from the market for secondary batteries as energy sources. there is definitively still a need to further improve the performances of LFP cathode material compared to what is disclosed and, especially, to what is commercially available.

### Objectives of the invention

It is an objective of the present invention to provide an LFP-based cathode material that is improved compared to that is available on the market or described in the state-of-the-art.

It is a further objective of the present invention to provide an LFP-based cathode material that shows a special specific capacity and an excellent capacity retention even at higher discharge rates (for example, 30C or even above), in ambient and extreme temperatures.

It is a further objective of the present invention to provide an LFP-based cathode material that can be manufactured easily, even at high tonnage, and can be used as a drop-in material.

### Description of the invention

The present invention relates to a cathode material comprising a compound having the formula LiMPO₄, M being at least one metal cation selected from the list consisting of Fe, V, Mn, Co and Ni, said compound comprising (i) secondary particles formed by agglomeration of (ii) primary particles and (iii) pores between said secondary and primary particles, wherein the primary particles have a plate-like morphology and a mean particle size d₅₀ in the range from 20 to 150 nm and wherein the secondary particles have a spherical morphology and a mean particle size d₅₀ in the range from 1 to 10 µm.

Hence, the invention is based on a novel and inventive approach. In particular, the inventors have found that a porous LFP material composed secondary particles with a specific morphology and size and formed by aggregation of primary particles with a specific morphology and size, it is possible to reach a very satisfactorily specific capacity and an excellent capacity retention at high discharge rates.

The present invention also relates to a secondary battery comprising an anode, a cathode, a separator and an electrolyte, said cathode comprising a cathode material according to the invention.

In present specification and claims, it is well understood by the person skilled in the art that, as used herein the terms "a", "an" or "the" means "at least one" and should not be limited to "only one" unless explicitly indicated to the contrary. Also, when a range is indicated, the extremities are included. In addition, all the integral and subdomain values in the numerical range are expressly included as if explicitly written.

Other features and advantages of the invention will be made clearer from reading the following description of preferred embodiments and figures, given by way of simple illustrative and non-restrictive examples.
FIG. 1 is XRD pattern of a cathode material from Example 1 according to the present invention.
FIG.2 is a FE-SEM image showing the cathode material from Example 1 according to the present invention.
FIG. 3 is a TEM image showing the cathode material (primary particles) from Example 1 according to the present invention.
FIG. 4 is a PSD graph of the cathode material from Example 1 according to the present invention.
FIG. 5 is a graph showing the computed capacity retention (in %) at room temperature with an increase in cycles number for a secondary battery prepared with the cathode material from Example 1 according to the present invention and a LFP cathode material from the market.
FIG. 6 is a FE-SEM image showing the LFP cathode material from the market.
FIG. 7 is a graph showing the computed capacity retention (in %) at different temperatures (other than room temperature) with an increase in cycles number for a secondary battery prepared with the cathode material from Example 1 according to the present invention and a cathode material from the market.
FIG. 8 presents two graphs showing the impedance of the secondary battery according to the invention (FIG. 8(a)) as well as for a secondary battery made the same manner with the "Benchmark LFP" (FIG. 8(b)).
FIG. 9 is a FE-SEM image showing the cathode material from Example 2 according to the present invention.
FIG. 10 is a PSD graph of the cathode material from Example 2 according to the present invention.

According to the invention, the cathode material comprises a compound having the formula LiMPO4, M being at least one metal cation selected from the list consisting of Fe, V, Mn, Co and Ni.

In particular, the compound having the formula LiMPO₄ has the ordered-olivine crystal structure, typically having tetrahedral polyanions (PO₄)³⁻ and a plurality of planes defined by zigzag chains and linear chains, where the M atoms occupy the zigzag chains of octahedra and the Li atoms occupy the linear chains of alternate planes of octahedral sites. In such a compound, alkali ions Li+ may be inserted/extracted reversibly from/to the electrolyte of the battery to/from the interstitial space of the host MPO₄ framework as the metal M cation (or combination of cations) is reduced/oxidized by charge-compensating electrons supplied/removed by the external circuit of the battery in a discharge/charge cycle.

According to the invention, M is at least one metal cation selected from the list consisting of Fe, V, Mn, Co and Ni. Example of formulas for the compound of the invention are, but not limited to, LiFePO₄, LiVPO₄, LiMnPO₄, LiCoPO₄ and LiNiPO₄. Preferably, the compound of the invention has the formula LiFePO₄ (M being Fe).

According to an embodiment of the invention, in the compound of formula LiMPO₄, M is a combination of at least two metal cations selected from the list consisting of Fe, V, Mn, Co and Ni. In particular, in the compound of formula LiMPO₄, M is a combination of two metal cations selected from the list consisting of Fe, V, Mn, Co and Ni. Examples of combinations according to this embodiment are, but not limited to, Fe₁₋ₓMnₓPO₄, Fe₁₋ₓ VₓPO₄Fe₁₋ₓ NiₓPO₄, Fe₁₋ₓ CoₓPO_{4,} where 0<x<1.

According to the invention, the compound comprises secondary particles formed by agglomeration of primary particles of smaller diameter.

Still according to the invention, the compound comprises further pores between said secondary and primary particles.

According to the invention, the primary particles have a plate-like morphology. By "plate-like morphology", it is meant in the invention, and as commonly accepted in the art of crystal morphology, a tri-dimensional shape with one if its dimension (then called "thickness") significantly lower than its other two dimensions (the larger being the width, the smaller being the length). In particular, in the invention, the primary particles may have a square-plate-like morphology, in which the length of plates is at least 2 times of its width and thickness. By "square-plate-like morphology", it is meant in the invention , and as commonly accepted in the art of crystal morphology, a tri-dimensional shape with one if its dimension ("thickness") significantly lower than its other two dimensions being close.

According to an embodiment of the invention, the primary particles with a plate-like morphology have an average width in the range of from 5 to 100 nm, preferably, in the range of from 10 to 100 nm, more preferably, in the range of from 10 to 80 nm.

According to the invention, the primary particles have a mean particle size d₅₀ in the range of from 20 to 150 nm. Preferably, the primary particles have a mean particle size d₅₀ in the range of from 20 to 100 nm.

By "mean particle size d₅₀", in the whole specification and in the claims, it is meant, as commonly accepted in the art, the particle size when the cumulative percentage reaches 50% (also called median particle diameter or median particle size). The d₅₀ may be measured by any method known in the art.

According to the invention, the secondary particles have a spherical morphology. For the sake of clarity, by "spherical morphology", it is meant in the invention, and as commonly accepted in the art of crystal morphology, that the shape of the secondary particles is essentially a sphere.

According to the invention, the secondary particles have a mean particle size d₅₀ in the range of from 1 to 10 µm. Preferably, the secondary particles have a mean particle size d₅₀ in the range of from 1.5 to 10 µm. Preferably also, the secondary particles have a mean particle size d₅₀ in the range of from 1 to 8 µm. More preferably, the secondary particles have a mean particle size d₅₀ in the range of from 1.5 to 8 µm, or even of from 2 to 8 µm.

The pores in the secondary particles may be of a closed or open-type, preferably of small size. The size of pores according to the invention is preferably in the range of from 200 to 800 nm, more preferably from 300 to 600 nm.

According to an embodiment of the invention, the compound has a porosity in the range of from 5 to 30 %. Preferably, it has a porosity in the range of from 10 to 30%. Preferably also, it has a porosity in the range of from 5 to 25%. More preferably, it has a porosity in the range of from 10 to 25%.

Advantageously, the cathode material of the invention may further optionally comprise a conductive material (in order to increase its conductivity), a binder (which helps binding the active cathode material to a conductive material and current collector) and/or a filler.

The conductive material is generally added in an amount of 1 to 30% by weight, based on the total weight of the cathode material. Examples of conductive materials that may be used in the present invention are carbon, graphite (natural or artificial), carbon fibers, precious metals, metals, conductive polymers and combinations thereof. Advantageously, the cathode material comprising carbon can efficiently improve conductivity, without greatly increasing preparation costs and weight.

The binder is generally added in an amount of 1 to 30% by weight, based on the total weight of the anode material. Examples of binder are polyvinylidene, polyvinyl alcohol, carboxymethylcellulose (CMC), starch, hydroxypropylcellulose, regenerated cellulose, polyvinyl pyrollidone, tetrafluoroethylene, polyethylene, polypropylene, ethylene propylene diene terpolymer (EPDM), sulfonated EPDM, styrene butadiene rubber and fluoro rubber.

The filler is used to inhibit electrode expansion. Examples of filler are olefin polymers such as polyethylene and polypropylene and fibrous materials such as glass fibers and carbon fibers.

Advantageously also, the cathode material of the invention has a sulphate content of not more than 100 ppm, preferably not more than 80 ppm; or even not more than 50 ppm.

Advantageously also, the cathode material of the invention has a hydrogen content of not more than 1000 ppm, preferably not more than 800 ppm; or even not more than 500 ppm.

The cathode material according to the present invention may be prepared by any method so long as the method enables formation of the claimed features of said cathode material.

Advantageously, the cathode material of the invention may be prepared by a hydrothermal/solvothermal synthesis.

For example, the process for preparing the cathode material of the invention may comprise the following steps, in order :
(a) primarily mixing solutions of starting materials in solvent(s), in stoichiometric amounts related to the targeted material,
(b) hydrothermal/solvothermal synthesis in a hydrothermal/solvothermal reactor/vessel,
(c) isolating the precipitate/solid, e.g. by centrifugation.

Next to steps (a) to (c), the process for preparing the cathode material of the invention may comprise further, after step (c), and optionally:
(d) washing the precipitate,
(d) wet ball milling (with optionally addition of a conductive material, e.g. carbon);
(e) drying (e.g. under vacuum or Ar or N₂); and
(f) calcining (e.g. at 600°C to 1200°C under Ar or N₂).

A starting material for lithium may be Li₂CO₃, Li(OH), Li(OH).H₂O, LiNO₃ and the like. Preferably, a starting material for lithium in the invention is lithium hydroxide, e.g. LiOH.H₂O or Li(OH).

A starting material for iron may be FeSO₄ or its hydrates, FeC₂O₄.2H₂O, or FeCl₂. Preferably, a starting material for iron in the invention is iron(II) sulphate, e.g. FeSO₄ or its hydrates (e.g. FeSO₄.7H₂O)

A starting material for phosphorus (P) may be H₃PO₄, NH₄H₂PO₄, (NH₄)₂HPO₄ or P₂O₅. Preferably, a starting material for phosphorus in the invention is H₃PO₄.

In step (a), an example of solvent is ethylene glycol or a mixture of ethyleneglycol and water (for example in a 1:1 ratio).

In step (b), the temperature may be in the range of from 200 to 700°C and the a pressure in the range of from 180 to 550 bar.

Finally, the invention also relates to a secondary battery comprising an anode, a cathode, a separator and an electrolyte, said cathode comprising a cathode material according to the invention.

The cathode according to invention may comprise the cathode material and a current collector.

The anode of the invention may comprise an anode material (comprising optionally a conductive material, a binder and/or a filler) and a current collector.

Examples of current collector for the cathode and/or the anode are stainless steel, aluminum, nickel, titanium, sintered carbon, nickel, titanium or silver. Said current collector may have various forms like films, sheets, foils, nets, porous structures, foams and non-woven fabrics, and it has generally a thickness of 3 to 500 µm.

The separator is interposed between the cathode and the anode. An insulating thin film having high ion permeability and mechanical strength may be used as the separator. The separator generally has a pore diameter of 0.01 to 10 µm and a thickness of 5 to 300 µm. Examples of separator are sheets or non-woven fabrics made of an olefin polymer such as polypropylene and/or glass fibers or polyethylene.

The electrolyte is ideally a lithium salt-containing non-aqueous electrolyte, composed of a non-aqueous electrolyte and a lithium salt. A non-aqueous electrolytic solution, a solid electrolyte or an inorganic solid electrolyte may be used as the non-aqueous electrolyte.

The secondary battery according to the invention show advantageously a specific capacity in the range from 120 to 200 mAh.g⁻¹.

Moreover, it also show advantageously a capacity retention in the range of from 80 to 90% at a 10C discharge rate.

It should be understood that the present invention is not limited to the described embodiments and that variations can be applied without going outside of the scope of the claims. Modifications and variations are possible within the scope of the appended claims. It is further noted that the invention relates to all possible combinations of features, and preferred features, described herein and recited in the claims.

The following examples are provided for illustrative purposes, and are not intended to limit the scope of this invention.

### Examples

### Example 1:

A cathode material according to the invention was prepared by the following steps in order:
- preparing solutions of LiOH.H₂O, FeSO₄.7H₂O, and H₃PO₄ (purchased from from Merck co, Ltd Germany, in analytical grade, without any purification) in ethyleneglycol and water as solvents (1:1);
- mixing the 3 solutions, in stoichiometric amounts (related to the targeted compound LiFePO₄), under stirring;
- transferring the mixture obtained at previous step to a hydrothermal vessel and sealing of said vessel under inert gas;
- hydrothermal treatment under constant stirring during 6h. at 180°C with no imposed external pressure;
- centrifuging to isolate the precipitate;
- washing the precipitate with distilled water;
- drying under vacuum et 60°C for 12h. ; and
- calcining under argon at 600°C for 6h, reaching the final material.

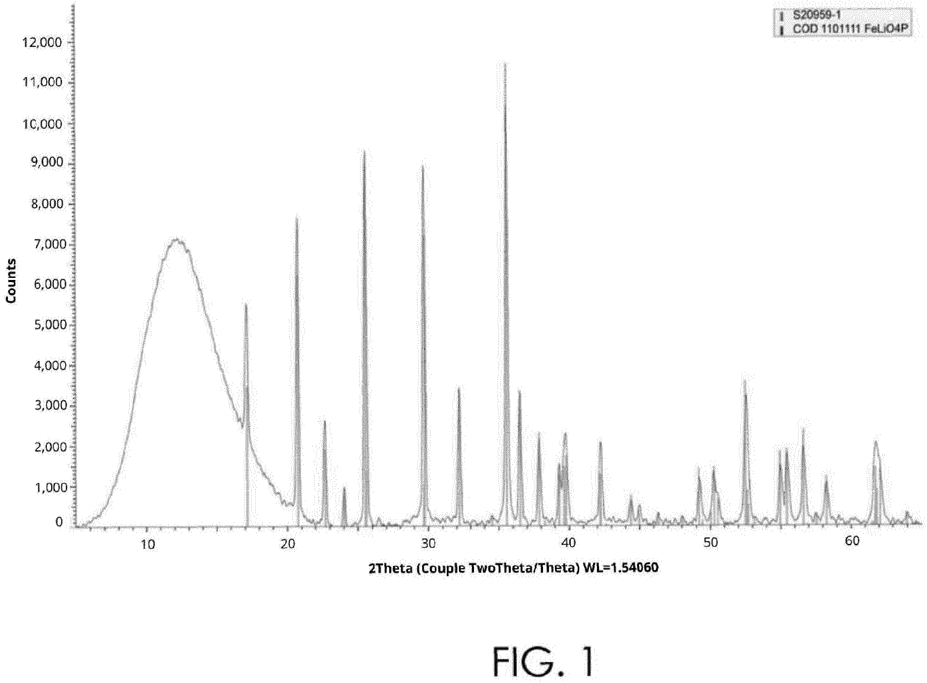

FIG.1 shows the XRD powder diffraction spectrum of the obtained final material, together with peaks indexation of the olivine-type LiFePO₄.

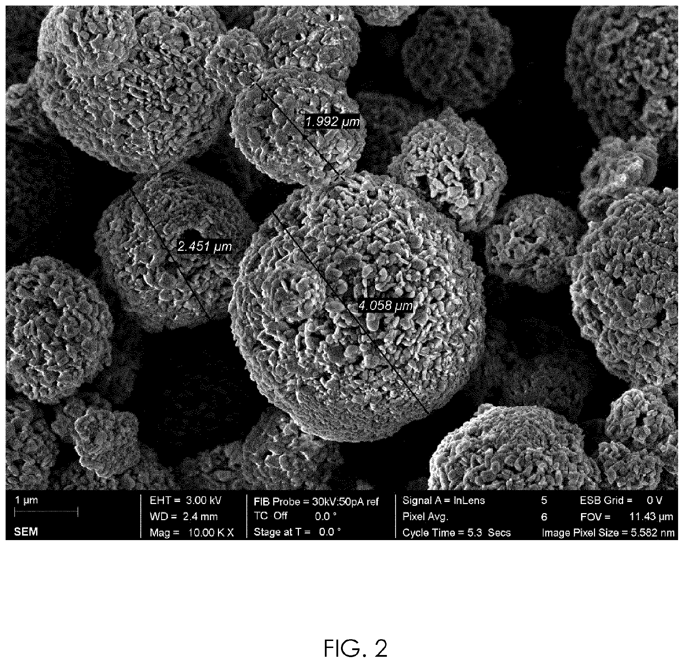

A FE-SEM image (Field Emission Scanning Electron Microscopy) of the obtained final material is illustrated in FIG. 2 (conditions for measurements are mentioned at the bottom). As can be seen from FIG.2, the secondary particles are formed of an agglomeration of primary particles and have a spherical morphology. Moreover, there are pores between secondary and primary particles.

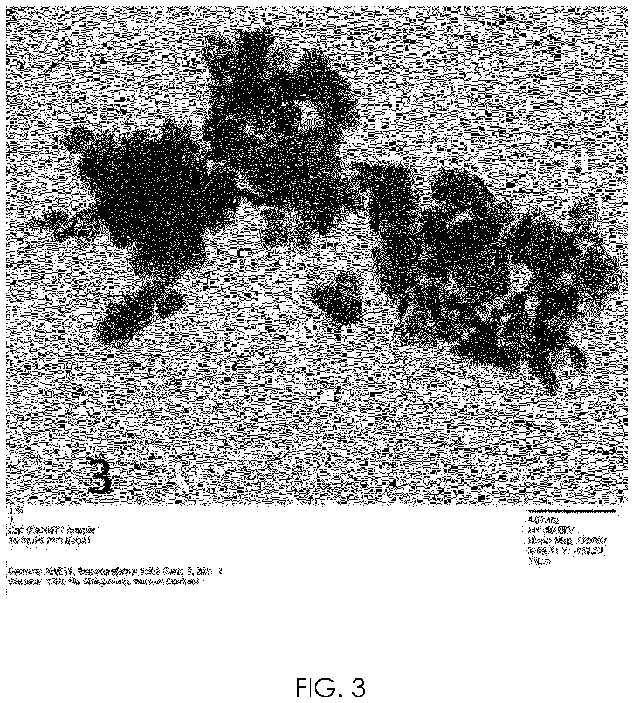

A TEM image of primary particles of the obtained final material (pre-isolated from secondary particles prior to analysis) is illustrated in FIG. 3 (conditions for measurements and scale are mentioned at the bottom). As can be seen from FIG.3, the observed primary particles show a plate-like morphology.

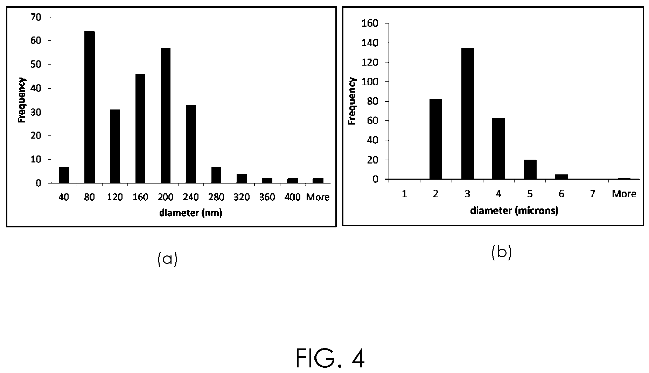

The size of secondary and primary particles were determined in Images, of at least 300 particles per sample (SEM for secondary particles and TEM for primary ones). FIG.4 shows the PSD graph for the obtained final material ((a) : primary particles, (b) secondary particles).

The following values were determined :
- d₅₀ of the primary particles : 141 nm
- d₅₀ of the secondary particles : 2.5 microns.

Its porosity was also evaluated at a 12.8 % value.

Secondary batteries, in the form of ten identical multilayer pouch cells, were fabricated (0.8 Ah capacity) with a cathode prepared with the final cathode material, an anode, a separator interposed between the cathode and anode and an electrolyte. The cathode was prepared as follows : 95 percent of the obtained cathode material was milled with 3wt% of a polyvinylidene fluoride binder and 2wt% of conductive carbon powder dispersed in NMP (N-methyl 2 pyrrolidone). The obtained slurry was cast on the current collector (an aluminium foil) and the so-obtained cathode was dried out and used as cathode in a secondary battery.

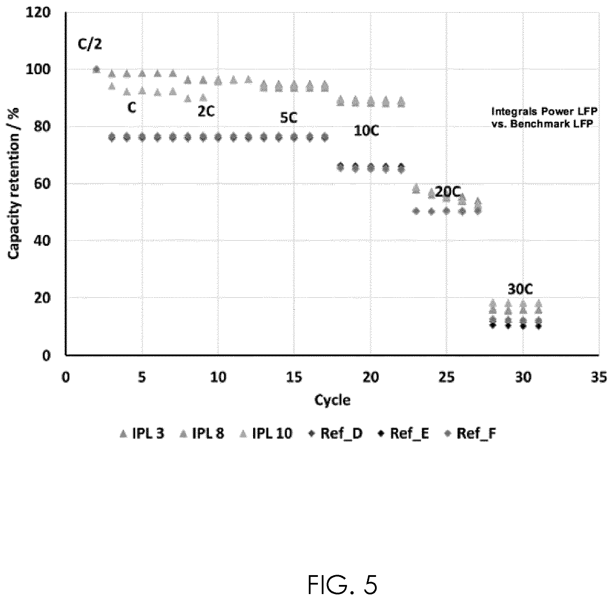

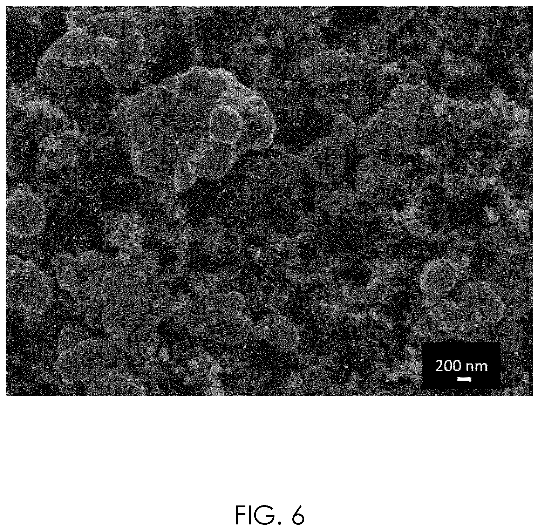

FIG. 5 is a graph showing the computed capacity retention (in %) at room temperature with an increase in cycles number for said secondary battery according to the invention (IPL3, IPL8 and IPL10 refer to the cell number amongst the 10 identical pouch cells fabricated) as well as for secondary batteries made the same manner with a LFP cathode material available on the market ("Benchmark LFP" manufactured by Aleees, REF_D, E, F refer to the cell number amongst the 10 identical pouch cells fabricated with the "Benchmark LFP"). FIG. 5 shows that the secondary battery according to the invention has excellent performances compared to what exists on the market.
The "benchmark LFP" has nanosphere (ununiform spheres with wide particle size distribution in the range 100-500 nm) primary particles with a mean particle size d₅₀ around 100 nm, assembled together to form secondary particles with unclear/random morphology and with an average particle size of about 1 micron. Moreover, it has a porosity value at about 30%. FIG.6 shows a FE-SEM image of said "benchmark LFP" that was extracted from the article "Aging of a Lithium-Metal/LFP Cell: Predictive Model and Experimental Validation" (Dessantis, D.; Di Prima, P.; Versaci, D.; Amici, J.; Francia, C.; Bodoardo, S.; Santarelli, M. in Batteries 2023, 9, 146).

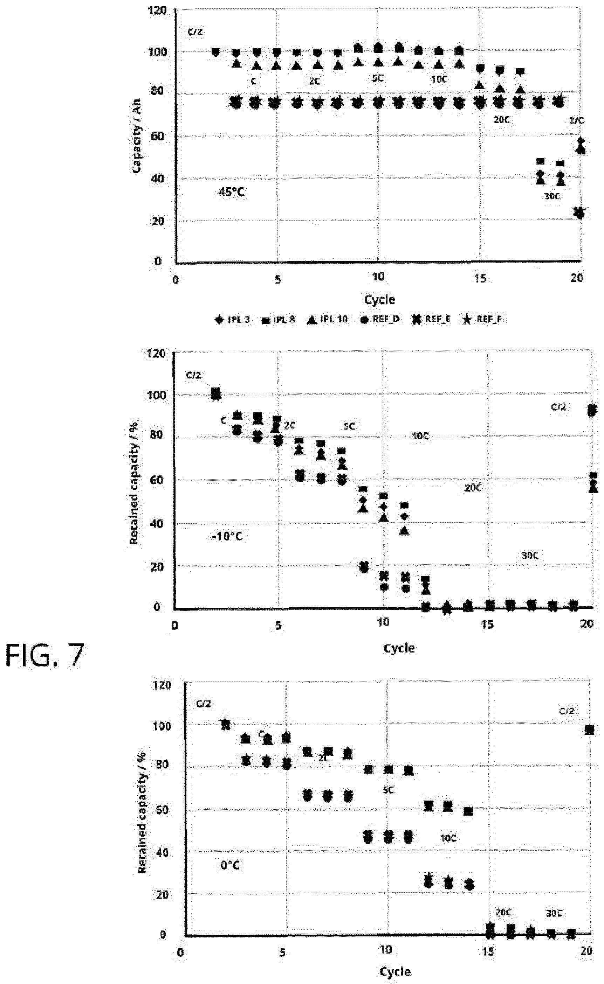

FIG. 7 is a graph showing the computed capacity retention (in %) at different temperatures (other than room temperature) with an increase in cycles number for same secondary batteries as from FIG. 5. This shows notably that the secondary battery according to the invention has excellent (nearly 3 times more) capacity retention at -10°C at 10C discharge rate compared to the benchmark LFP product.

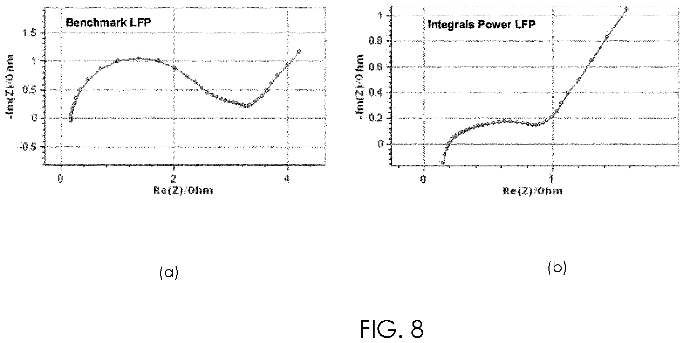

FIG. 8 presents two graphs with the impedance of the secondary battery according to the invention (FIG. 8(b)) as well as for a secondary battery made the same manner with the "Benchmark LFP" (FIG. 8(a)), and showing again that the secondary battery of the invention is better.

### Example 2:

A cathode material according to the invention was prepared by the following steps in order:
- preparing solutions of LiOH.H₂O, FeSO₄.7H₂O, MnSO₄ and H₃PO₄ (purchased from from Merck co, Ltd Germany, in analytical grade, without any purification) in ethyleneglycol and water as solvents (1:1);
- mixing the 3 solutions, in stoichiometric amounts (related to the targeted compound LiFe_{0.5}Mn_{0.5}PO₄), under stirring;
- transferring the mixture obtained at previous step to a hydrothermal vessel and sealing of said vessel under inert gas;
- hydrothermal treatment under constant stirring during 6h. at 180°C with no imposed external pressure;
- centrifuging to isolate the precipitate;
- washing the precipitate with distilled water;
- drying under vacuum et 60°C for 12h. ; and
- calcining under argon at 600°C for 6h, reaching the final material.

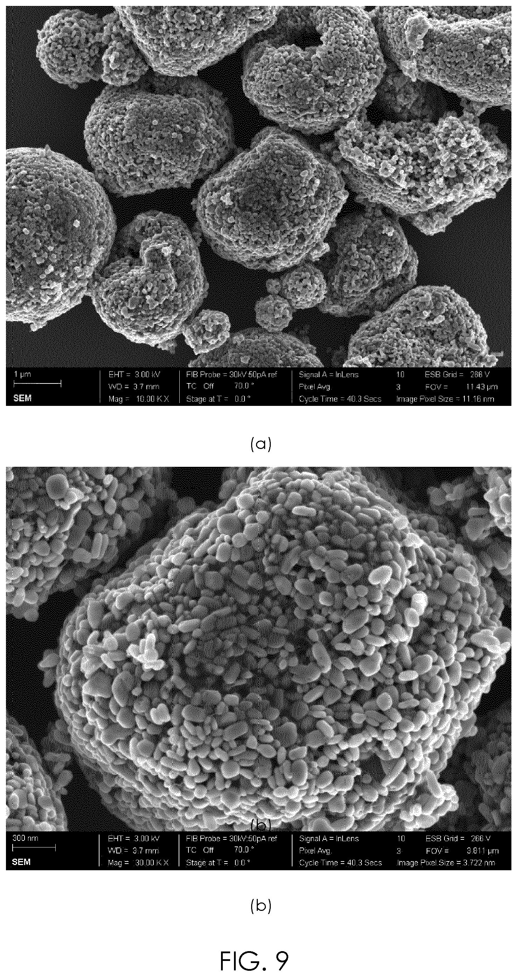

A FE-SEM image of the obtained final material is illustrated in FIG. 9 (conditions for measurements are mentioned at the bottom, (a)-(b): two different scales). As can be seen, the secondary particles are formed of an agglomeration of primary particles and have a spherical morphology. Moreover, there are pores between secondary and primary particles.

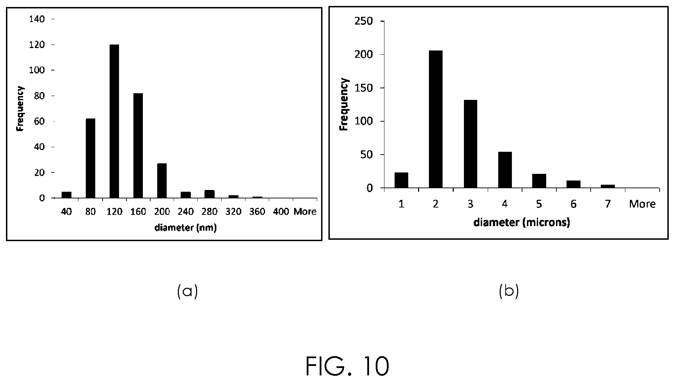

The size of secondary and primary particles were determined in Images, of at least 300 particles per sample (SEM for secondary particles and TEM for primary ones). FIG.10 shows the PSD graph for the obtained final material ((a) : primary particles, (b) secondary particles).

The following values were determined:
- d₅₀ of the primary particles : 110 nm
- d₅₀ of the secondary particles : 1.96 microns.

## Claims

1. Cathode material comprising a compound having the formula LiMPO₄, M being at least one metal cation selected from the list consisting of Fe, V, Mn, Co and Ni, said compound comprising (i) secondary particles formed by agglomeration of (ii) primary particles and (iii) pores between said secondary and primary particles,
wherein the primary particles have a plate-like morphology and a mean particle size d₅₀ in the range of from 20 to 150 nm and wherein the secondary particles have a spherical morphology and a mean particle size d₅₀ in the range of from 1 to 10 µm, the mean particle size being measured according to the method detailed in the description.

2. Cathode material according to any of preceding claims, **characterized in that** said compound has the formula LiFePO₄.

3. Cathode material according to claim 1, **characterized in that** M is a combination of at least two metal cations selected from the list consisting of Fe, V, Mn, Co and Ni.

4. Cathode material according to any of preceding claims, **characterized in that** said compound has a porosity in the range of from 5 to 30 %.

5. Cathode material according to any of preceding claims, **characterized in that** it is prepared by a hydrothermal or a solvothermal synthesis.

6. Cathode material according to any of the preceding claims, **characterized in that** the primary particles have a square-plate-like morphology in which the length of plates is at least 2 times of its wide and thickness.

7. Cathode material according to the any of the preceding claim, **characterized in that** the primary particles have an average width in the range of from 5 to 100 nm.

8. Cathode material according to the any of the preceding claim, **characterized in that** the secondary particles have a mean particle size d₅₀ in the range of from 1.5 to 10 µm.

9. Cathode material according to the any of the preceding claim, **characterized in that** it has a sulphate content of not more than 100 ppm.

10. Cathode material according to the any of the preceding claim, **characterized in that** it has a hydrogen content of not more than 1000 ppm.

11. Secondary battery comprising an anode, a cathode, a separator and an electrolyte, said cathode comprising a cathode material according to any of claims 1-10.

12. Battery according to claim 11, **characterized in that** it shows a capacity retention in the range of from 80 to 90 % at a 10C discharge rate.

## Patentansprüche

1. Kathodenmaterial, das eine Verbindung der Formel LiMPO₄ umfasst, wobei M mindestens ein Metallkation ist, ausgewählt aus der Liste bestehend aus Fe, V, Mn, Co und Ni, wobei die Verbindung (i) Sekundärpartikel, die durch Agglomeration von (ii) Primärpartikeln gebildet werden, und (iii) Poren zwischen den Sekundär- und Primärpartikeln umfasst,
wobei die Primärpartikel eine plattenartige Morphologie und eine mittlere Partikelgröße d₅₀ im Bereich von 20 bis 150 nm aufweisen und wobei die Sekundärpartikel eine kugelförmige Morphologie und eine mittlere Partikelgröße d₅₀ im Bereich von 1 bis 10 µm aufweisen, wobei die mittlere Partikelgröße gemäß dem in der Beschreibung näher erläuterten Verfahren gemessen wird.

2. Kathodenmaterial nach einem der vorhergehenden Ansprüche, **dadurch gekennzeichnet, dass** die Verbindung die Formel LiFePO₄ aufweist.

3. Kathodenmaterial nach Anspruch 1, **dadurch gekennzeichnet, dass** M eine Kombination aus mindestens zwei Metallkationen ist, ausgewählt aus der Liste bestehend aus Fe, V, Mn, Co und Ni.

4. Kathodenmaterial nach einem der vorhergehenden Ansprüche, **dadurch gekennzeichnet, dass** die Verbindung eine Porosität im Bereich von 5 bis 30 % aufweist.

5. Kathodenmaterial nach einem der vorhergehenden Ansprüche, **dadurch gekennzeichnet, dass** es durch eine hydrothermale oder eine solvothermale Synthese hergestellt wird.

6. Kathodenmaterial nach einem der vorhergehenden Ansprüche, **dadurch gekennzeichnet, dass** die Primärpartikel eine quadratplattenartige Morphologie aufweisen, bei der die Länge der Platten mindestens das Zweifache ihrer Breite und Dicke beträgt.

7. Kathodenmaterial nach einem der vorhergehenden Ansprüche, **dadurch gekennzeichnet, dass** die Primärpartikel eine durchschnittliche Breite im Bereich von 5 bis 100 nm aufweisen.

8. Kathodenmaterial nach einem der vorhergehenden Ansprüche, **dadurch gekennzeichnet, dass** die Sekundärpartikel eine mittlere Partikelgröße d₅₀ im Bereich von 1,5 bis 10 µm aufweisen.

9. Kathodenmaterial nach einem der vorhergehenden Ansprüche, **dadurch gekennzeichnet, dass** es einen Sulfatgehalt von nicht mehr als 100 ppm aufweist.

10. Kathodenmaterial nach einem der vorhergehenden Ansprüche, **dadurch gekennzeichnet, dass** es einen Wasserstoffgehalt von nicht mehr als 1000 ppm aufweist.

11. Sekundärbatterie, umfassend eine Anode, eine Kathode, einen Separator und einen Elektrolyten, wobei die Kathode ein Kathodenmaterial nach Anspruch 1-10 umfasst.

12. Batterie gemäß Anspruch 11, **dadurch gekennzeichnet, dass** sie bei einer Entladerate von 10C eine Kapazitätserhaltung im Bereich von 80 bis 90 % aufweist.

## Revendications

1. Matériau de cathode comprenant un composé de formule LiMPO₄, M étant au moins un cation métallique choisi dans la liste comprenant Fe, V, Mn, Co et Ni, ledit composé comprenant (i) des particules secondaires formées par agglomération de (ii) particules primaires et (iii) pores présents entre lesdites particules secondaires et primaires,
les particules primaires présentant une morphologie en forme de plaque et une taille moyenne de particule d₅₀ dans la plage de 20 à 150 nm, et les particules secondaires présentant une morphologie sphérique et une taille moyenne de particule d₅₀ dans la plage de 1 à 10 µm, la taille moyenne de particule étant mesurée selon la méthode détaillée dans la description.

2. Matériau de cathode selon l'une quelconque des revendications précédentes, **caractérisé en ce que** ledit composé présente la formule LiFePO₄.

3. Matériau de cathode selon la revendication 1, **caractérisé en ce que** M est une combinaison d'au moins deux cations métalliques choisis dans la liste comprenant Fe, V, Mn, Co et Ni.

4. Matériau de cathode selon l'une quelconque des revendications précédentes, **caractérisé en ce que** ledit composé présente une porosité dans la plage de 5 à 30 %.

5. Matériau de cathode selon l'une quelconque des revendications précédentes, **caractérisé en ce qu'**il est préparé par synthèse hydrothermique ou solvothermique.

6. Matériau de cathode selon l'une quelconque des revendications précédentes, **caractérisé en ce que** les particules primaires présentent une morphologie en forme de plaques carrées dans laquelle la longueur des plaques est au moins deux fois supérieure à leur largeur et à leur épaisseur.

7. Matériau de cathode selon l'une quelconque des revendications précédentes, **caractérisé en ce que** les particules primaires présentent une largeur moyenne dans la plage de 5 à 100 nm.

8. Matériau de cathode selon l'une quelconque des revendications précédentes, **caractérisé en ce que** les particules secondaires présentent une taille moyenne de particule d₅₀ dans la plage de 1,5 à 10 µm.

9. Matériau de cathode selon l'une quelconque des revendications précédentes, **caractérisé en ce qu'**il présente une teneur en sulfate ne dépassant pas 100 ppm.

10. Matériau de cathode selon l'une quelconque des revendications précédentes, **caractérisé en ce qu'**il présente une teneur en hydrogène ne dépassant pas 1000 ppm.

11. Batterie secondaire comprenant une anode, une cathode, un séparateur et un électrolyte, ladite cathode comprenant un matériau de cathode selon l'une quelconque des revendications 1 à 10.

12. Batterie selon la revendication 11, **caractérisée en ce qu'**elle présente une rétention de capacité dans la plage de 80 à 90 % à un taux de décharge de 10C.
